# EUROPEAN PATENT SPECIFICATION

(11) **EP 2 817 374 B1**
(45) Date of publication and mention of the grant of the patent: **28.06.2017**
(21) Application number: 12755843.5
(22) Date of filing: 02.09.2012
(51) Int. Cl.: C08L 79/02

(54) **CARBOHYDRATE BASED BINDER SYSTEM AND METHOD OF ITS PRODUCTION**
AUF KOHLENHYDRAT BASIERENDES BINDERYSTEM UND VERFAHREN ZU SEINER HERSTELLUNG
SYSTÈME LIANT À BASE DE GLUCIDES ET SON PROCÉDÉ DE PRODUCTION

(30) Priority: 02.09.2011 GB 201115172
(43) Date of publication of application: 31.12.2014
(73) Proprietor: Knauf Insulation, 4600 Visé (BE)
(72) Inventor: JACKSON, Roger, St. Helens Merseyside WA10 3NS (GB); HAMPSON, Carl, St. Helens Merseyside WA10 3NS (GB); ROBINSON, James, St. Helens Merseyside WA10 3NS (GB); PACOREL, Bénédicte, St Helens Merseyside WA10 3NS (GB)
(74) Representative: Farmer, Guy Dominic
(86) International application number: PCT/EP2012/067044
(87) International publication number: WO 2013/030390

(56) References cited:
- WO-A2-2007/014236
- DE-A1- 1 905 054
- US-A1- 2011 046 271

## Description

The present invention relates to an aqueous carbohydrate based binder composition, comprising a carbohydrate component and an amine component, wherein the carbohydrate component comprises one or more pentose sugars, as well as to a method of its production.

Binders are generally useful in the manufacture of articles which are based on non- or only loosely-assembled matter. For example, binders are extensively used in the production of products comprising consolidated fibers, e.g. in the form of thermosetting binder compositions which are cured upon heat treatment. Examples of such thermosetting binder compositions include a variety of phenol-aldehyde, urea-aldehyde, melamine-aldehyde, and other condensation-polymerization materials like furane and polyurethane resins. Binder compositions based on phenol-aldehyde, resorcinol-aldehyde, phenol/aldehyde/urea, phenol/melamine/urea etc., are frequently used for bonding fibers, textiles, plastics, rubbers, and may other materials.

Examples of cellulosic composite comprising cellulosic material and a binder are disclosed in US 2011/0046271.

The mineral wool and fiber board industries have historically used a phenol formaldehyde binder in their products. Phenol formaldehyde binders provide suitable properties to the final products, are readily available and easy to process. However, environmental considerations have lead to the development of alternative binder systems, such as carbohydrate-based binders, which are obtained e.g. by reacting a carbohydrate with a multiprotic acid (cf. WO 2009/019235), or as esterification products obtained by reacting a polycarboxylic acid with a polyol (cf. US 2005/0202224). Because these alternative binders are not based on formaldehyde as a reagent, they have been collectively referred to as "formaldehyde-free binders".

Recently, binders which are obtained as reaction products of an amine component and a reducing sugar (or non-carbohydrate carbonyl) component have been identified as a promising class of such formaldehyde-free binders (WO 2007/014236). Such binders may be made via a Maillard reaction forming polymeric melanoidins which provide sufficient bonding strength.

However, in addition to avoiding binder systems which contain less desirable reactants or reaction products, such as formaldehyde, an increase in the cure rate of the binder is constantly desired, thus reducing production time and making the binder potentially useful in lower temperature ranges.

In view of the above, a need exists for an environmentally acceptable binder composition which further offers improved curing rates, when compared to conventional binders, and can preferably be produced using natural renewable materials.

Accordingly, the technical problem underlying the present invention is therefore to provide a binder composition which is mainly based on renewable resources and provides improved cure rates, as well as a method for producing the same.

According to the present invention, the above-described technical problem is solved by providing an aqueous binder composition in accordance with claim 1.

According to the present invention, the expression "aqueous binder composition" is not specifically restricted and includes any mixture of at least the afore-mentioned binder components (a) and (b) in water or a water-containing solvent. Such a mixture may be a (partial) solution of one or more of said binder components, or may be present in form of a dispersion, such as an emulsion or a suspension. According to the present invention, the term "aqueous" is not restricted to water only as a solvent, but also includes solvents which are mixtures containing water as one component. According to a preferred embodiment of the present invention, the aqueous binder composition is a solution or a suspension.

The solid content of the above aqueous binder composition may, for example, range from 5 to 95 mass%, from 8 to 90 mass%, or from 10 to 85 mass%, based on the mass of the total aqueous binder composition. In particular, the solid content of the aqueous binder composition may be adjusted to suit each individual application.

Particularly when used as a binder for mineral wool insulation, the solid content of the aqueous binder composition may be in the range of 5 to 25 mass%, preferably in the range of 10 to 20 mass%, or more preferably in the range of 12 to 18 mass%, based on the mass of the total aqueous binder composition. Particularly when used as a binder for wood boards, the solid content of the aqueous binder composition may be in the range of 50 to 90 mass%, preferably in the range of 55 to 85 mass%, or more preferably in the range of 60 to 80 mass%, based on the mass of the total aqueous binder composition.

Herein, the expression "carbohydrate component" is not specifically restricted and generally includes one or more polyhydroxy aldehydes and/or polyhydroxy ketones, and specifically includes saccharides, such as monosaccharides, disaccharides, oligosaccharides and polysaccharides, or further reducing sugars. The carbohydrate component of the present invention may comprise one or more compounds of the general formula Cₘ(H₂O)ₙ, wherein m and n may be the same or different from each other, but also includes derivatives thereof wherein, for example, amino groups are added (e.g. to yield glycosamines) or oxygene atoms are removed (e.g. to yield deoxycarbohydrates). Herein, the above-mentioned term "carbohydrate component" further includes naturally occurring carbohydrate derivatives, and such derivatives, which may form during the preparation of the carbohydrate component (e.g. during cellulolysis).

Moreover, herein, the expression "amine component" is not specifically restricted and generally includes any compounds acting as a nitrogen-source which can undergo a polymerization reaction with the carbohydrate component of the present invention.

According to a preferred embodiment of the present invention, the amine component is selected from the group consisting of proteins, peptides, amino acids, organic amines, polyamines, ammonia, ammonium salts of a monomeric polycarboxylic acid, ammonium salts of a polymeric polycarboxylic acid, and ammonium salts of an inorganic acid, or any combination thereof.

The amine component may comprise one or more of: triammonium citrate, ammonium sulphate, ammonium phosphate including mono- and diammonium phosphate, diethylenetriamine, aliphatic amines including 1,4-butanediamine, 1,5-pentanediamine, hexamethylenediamine, 1,7-heptanediamine, 1,8-octanediamine, 1,9-nonanediamine, 1,10-decanediamine, 1,11-undecanediamine, 1,12-dodecanediamine, 1,5-diamino-2-methylpentane, a Jeffamine, a polyamine, a polyamine comprising two or more primary amine groups, separated by an alkyl group, particularly an alkyl group comprising at least 4 carbon atoms, a heteroalkyl group, a cycloalkyl group, a heterocycloalkyl group, as well as derivatives and combinations thereof.

Herein, the expression "ammonium" is not specifically restricted and, for example, includes compounds of the general formulae [⁺NH₄]ₓ, [⁺NH₃R¹]ₓ, and [⁺NH₂R¹R²]ₓ, wherein x is an integer of at least 1, and R¹ and R² are each independently selected from alkyl, cycloalkyl, alkenyl, cycloalkenyl, heterocyclyl, aryl, and heteroaryl. Moreover, according to the present invention, the term "pentose" is not specifically restricted and includes any natural and synthetic carbohydrates containing five carbon atoms. According to one embodiment of the present invention, the term "pentose" includes the monosaccharides xylose, arabinose, ribose, lyxose, ribulose and xylulose, including their D- and L-stereoisomers, as well as any combination thereof. Moreover, the pentoses of the present invention also include such derivatives, which are formed e.g. through addition of an amino group (pentosamines), removal of an oxygen atom (deoxypentoses), rearrangement reactions, protonation or deprotonation.

According to the present invention, the one or more pentose(s) are present in the carbohydrate component in a total amount of 3 to 70 mass%, based on the mass of the total carbohydrate component (a). However, the amount of said one or more pentose(s) may be adjusted, e.g. to achieve improved cure rates of the binder composition, and may, for example be in the range of 3 to 65 mass%, 3 to 60 mass% or 3 to 55 mass%, based on the mass of the total carbohydrate component (a). According to a further example of the present invention, the amount of said one or more pentose(s) may be in the range of 5 to 70 mass% or in the range of 10 to 70 mass%, or in the range of 15 to 70 mass%, based on the mass of the total carbohydrate component (a). Specific examples include pentose contents of 50 mass% or less, 45 mass% and less, as well as 40 mass% and less.

According to the present invention, the carbohydrate component (a) further comprises one or more hexose(s) in a total amount of 97 to 30 mass%, based on the mass of the total carbohydrate component (a).

According to the present invention, the amount of said one or more hexose(s) may by adjusted, e.g. to achieve improved cure rates of the binder composition, and may, for example be in the range of 97 to 35 mass%, 97 to 40 mass% or 97 to 45 mass%, based on the mass of the total carbohydrate component (a). According to a further example of the present invention, the amount of said one or more hexose(s) may be in the range of 95 to 30 mass%, in the range of 90 to 30 mass%, or in the range of 85 to 30 mass%, based on the mass of the total carbohydrate component (a).

According to the present invention, the term "hexose" is not specifically restricted and includes any natural and synthetic carbohydrates containing six carbon atoms. According to one embodiment of the present invention, the term "hexose" includes the monosaccharides allose, altrose, glucose, mannose, gulose, idose, galactose, talose, fructose, psicose, sorbose, tagatose, including their D- and L-stereoisomers, as well as any combination thereof. Moreover, the hexoses of the present invention also include such derivatives, which are formed e.g. through addition of an amino group (hexosamines), removal of an oxygen atom (deoxyhexoses), rearrangement reactions, protonation or deprotonation. According to a preferred embodiment of the present invention, the hexose is or includes dextrose.

According to the present invention, the ratio of the one or more pentose(s) to the one or more hexose(s) may be adjusted, e.g. within the above-mentioned ranges, in order to achieve improved cure properties or increased binding performance in the final product. However, said desired ratio of pentose(s) to hexose(s) depends on the type and amount of said hexose and pentose fractions within the carbohydrate component of the above-defined binder.

Furthermore, in view of environmental considerations, the sources of the carbohydrates constituting the carbohydrate component (a) of the binder composition as defined above are preferably renewable sources, such as cellulose-based sources present in (energy) plants, plant products, wood (chips), used paper, paper mill waste, brewery waste, timber bark, etc.

In a further embodiment, the present invention relates to a binder composition as defined above, wherein said binder composition further comprises an amino acid component (c).

Herein, the expression "amino acid component" is not specifically restricted, and includes all natural and synthestic amino acids, as well as oligomers thereof, such as peptides, and polymers thereof, such as proteins. According to the present invention, the amino acid component (c) comprises one or more amino acids in an amount of 1 to 25 mass%, 2 to 20 mass% or 3 to 15 mass%, based on the total mass of the solid content of the binder composition as defined above.

Said amino acid component (c) is suited to further improve the properties of the binder composition, for example, in respect of ease of applicability to a product and/or enhanced rigidity and/or stability of color.

Preferably, in view of environmental considerations, also the amino acids constituting the amino acid component (c) of the binder composition defined above are obtained from renewable sources, such as cellulose-based sources present in (energy) plants, plant products, wood, used paper, paper mill waste, etc.

The above-defined binder composition may be cured by a variety of technologies known in the art, such as application of heat, irradiation, addition of curing-initiators, etc. According to a further embodiment, the present invention relates to a binder obtainable by heating the binder composition as defined above.

According to a further aspect, the present invention relates to a method of producing an aqueous binder composition, comprising a carbohydrate component (a) and an amine component (b), wherein the carbohydrate component (a) comprises one or more pentose(s) in a total amount of 3 to 70 mass% and one or more hexose(s) in a total amount of 97 to 30 mass%, based on the mass of the total carbohydrate component (a), wherein the method comprises the steps: (i) hydrolyzing one or more cellulose-based carbohydrate source(s), (ii) isolating the carbohydrates from the one or more hydrolized cellulose-based carbohydrate source(s), (iii) using the isolated carbohydrates from the one or more cellulose-based carbohydrate source(s) to form a carbohydrate component (a), comprising one or more pentose(s) in a total amount of 3 to 70 mass%, based on the mass of the total carbohydrate component (a), and (iv) adding an amine component (b).

According to the method of the present invention, the expressions "carbohydrate component", "amine component", "amino acid component", "pentose(s)" and "hexose(s)" are as defined above.

Moreover, the expression "hydrolyzing" used herein is not specifically restricted and generally refers to all chemical and physico-chemical reactions which yield carbohydrate compounds from a cellulose-based carbohydrate source. For example, the expression "hydrolyzing" includes heat/pressure treatment, acidic and/or basic treatment, enzymatic treatment, or treatment with synthetic catalysts, as well as metal chloride hydrolysis e.g. using zinc chloride or calcium chloride, as well as any combination thereof. The process of "hydrolyzing" the cellulose-based carbohydrate source may be carried out in a single process or may contain a sequence of processes. For example, a cellulose-based carbohydrate source may be hydrolyzed by an acidic treatment, or may be hydrolyzed by a combination of an enzymatic treatment and a subsequent acidic treatment.

According to one embodiment, the present invention relates to a method as defined above, wherein step (i) of hydrolyzing one or more cellulose-based carbohydrate source(s) independently comprises treatment with heat/pressure, enzymatic and/or acidic treatment and/or metal chloride hydrolysis of each of said one or more cellulose-based carbohydrate source(s).

Herein, the expression "cellulose-based carbohydrate source" is not specifically restricted and includes any natural or synthetic material, or mixture of materials, which contains cellulose or cellulose derivatives. In this context, the term "cellulose" is not specifically restricted and does not only refer to cellulose as such, but also includes any other carbohydrate oligomers and polymers which occur in plant biomass, such as hemicellulose or derivatives thereof. The term "cellulose" further includes any breakdown-products resulting from natural and synthetic cellulolysis, such as cellodextrins, as well as lower molecular weight poly- and oligosaccharides. Typically, a cellulose-based carbohydrate source will contain a variety of different carbohydrate polymers. For example, most plant biomass contains lignocellulose comprising a mixture of cellulose and hemicellulose.

According to the present invention, the step of isolating the carbohydrates from the one or more hydrolized cellulose-based carbohydrate source(s) is not specifically restricted and includes any chemical or physical treatment to obtain a composition containing one or more carbohydrates. For example, the term "isolating" may include a simple step of separating solids, such as plant fibers, from the hydrolyzing reaction mixture to obtain a carbohydrate solution comprising one or more carbohydrates. On the other hand, the "isolating"-step may include a combination of a variety of techniques, such as filtration, centrifugation, crystallization, precipitation, solvent removal by evaporation, etc, in order to obtain a carbohydrate-containing composition having a desired purity or constitution.

According to the present invention, the hydrolysis and isolating steps of the method as defined above may preferably be adjusted - considering the type and amount of cellulose-based carbohydrate to be hydrolyzed - to obtain a carbohydrate fraction, comprising one or more pentose(s) in the required amount to readily prepare the binder composition of the present invention. For example, depending on the cellulose-based carbohydrate source(s), the steps of hydrolyzing said sources and isolating the thus obtained carbohydrates may be adjusted to readily obtain an aqueous solution of said carbohydrate component (a) comprising 3 to 70 mass% of one or more pentose(s), based on the mass of the total carbohydrate component present in said aqueous solution. According to a further example of the present invention, an aqueous solution of a carbohydrate component (a) comprising 3 to 65 mass%, 3 to 60 mass%, or 3 to 55 mass% of the one or more pentose(s), based on the mass of the total carbohydrate component (a), may be obtained after the hydrolysis and isolation steps of the above-defined method. According to a further example of the present invention, the amount of said one or more pentose(s) of said carbohydrate component (a) present in the aqueous solution obtained after the afore-mentioned hydrolysis and isolation steps may be in the range of 5 to 70 mass%, in the range of 10 to 70 mass%, or in the range of 15 to 70 mass%, based on the mass of the total carbohydrate component (a) present in said aqueous solution. Further examples of the pentose content in said aqueous solution of said carbohydrate component (a) obtained from the above-mentioned steps of hydrolyzing and isolating include 50 mass% or less, 45 mass% or less, and 40 mass% or less.

In the method of the present invention, the step of using the isolated carbohydrates from the one or more cellulose-based carbohydrate source(s) to form a carbohydrate component is not specifically restricted and includes any techniques suited to arrive at a desired carbohydrate composition constituting the carbohydrate component (a) as defined above. For example, the carbohydrate component may be formed by using carbohydrate mixtures, e.g. as a solid mixture or in form of a solution or dispersion, obtained after the isolating step as such, or may be formed by combining two or more carbohydrate mixtures obtained from cellulose-hydrolyzation. According to the present invention, the step of using the isolated carbohydrates from the one or more cellulose-based carbohydrate source(s) to form a carbohydrate component also includes the case wherein one or more carbohydrates are added to carbohydrate mixture obtained after cellulose-hydrolyzation and carbohydrate isolation. For example, a carbohydrate mixture obtained from hydrolysis of a specific cellulose-based carbohydrate source, containing mainly xylose as a pentose, may be supplemented with other pentoses or one or more hexoses, such as dextrose. According to a further example of the present invention, an aqueous solution of a carbohydrate component (a) comprising 97 to 35 mass%, 97 to 40 mass%, or 97 to 45 mass% of the one or more hexose(s), based on the mass of the total carbohydrate component (a), may be obtained after the hydrolysis and isolation steps of the above-defined method. According to a further example of the present invention, the amount of said one or more hexose(s) of said carbohydrate component (a) present in the aqueous solution obtained after the afore-mentioned hydrolysis and isolation steps may be in the range of 95 to 30 mass%, in the range of 90 to 30 mass%, or in the range of 85 to 30 mass%, based on the mass of the total carbohydrate component (a) present in said aqueous solution.

In such a case, the steps of hydrolyzing the one or more cellulose-based carbohydrate source(s) and of isolating the resulting carbohydrates may preferably be adjusted to readily yield an aqueous solution of a carbohydrate component comprising 3 to 70 mass%, 3 to 65 mass%, 3 to 60 mass%, 3 to 55 mass%, 5 to 70 mass%, 10 to 70 mass%, or 15 to 70 mass% of one or more pentose(s), and 97 to 30 mass%, 97 to 35 mass%, 97 to 40 mass%, 97 to 45 mass%, 95 to 30 mass%, 90 to 30 mass%, or 85 to 30 mass% of one or more hexose(s), based on the mass of the total carbohydrate component present in said solution.

According to a further embodiment of the method as defined above, the at least one pentose is selected from the group consisting of xylose, arabinose, ribose, lyxose, ribulose and xylulose, or any combination thereof.

According to the present invention, it is preferred to use a cellulose-based carbohydrate source which yields, upon hydrolysis, a significant amount of one or more pentose(s) readily usable in the preparation of the binder composition as defined above. According to a further embodiment of the present invention, such cellulose-based carbohydrate source(s) are selected from the group consisting of agricultural residues such as corn stover and sugarcane bagasse; dedicated energy crops such as sugar beet, switchgrass, *Miscanthus*, hemp, willow and corn; wood residues, such as wood chips, timber bark, saw mill discards and paper mill discards; municipal paper waste, such as used paper and low grade paper waste; as well as industrial cellulose sources, such as brewery waste and dairy products.

For example, in view of environmental aspects, the above cellulose sources include all sorts of cellulose-containing waste, such as paper waste e.g. coming up in industrial paper production processes (for example paper pulp discards), non-recyclable low grade paper waste, contaminated cellulose-containing waste, or cellulose-containing composite materials, etc.

Further, another embodiment relates to the above-defined method of the present invention, wherein step (iii) of forming the carbohydrate component (a) includes combining carbohydrates and/or carbohydrate mixtures obtained from at least two different cellulose-based carbohydrate sources.

According to the present invention, in order to obtain a desired carbohydrate component having a carbohydrate composition which is effective in a binder composition, one or more carbohydrates or carbohydrate mixtures obtained from different cellulose-based carbohydrate sources may be combined. In such a case, the chemical composition of such carbohydrate mixtures resulting from hydrolysis of each of the different cellulose-based carbohydrate sources may be identified by suitable analytical methods known in the art and subsequently combined as desired.

A further embodiment of the present invention relates to the method as defined above, wherein said binder composition further comprises an amino acid component (c).

As mentioned above, the presence of an amino acid component may be useful in order to obtain an improved binder composition, e.g. with respect to increased cure rates.

In another embodiment, the present invention relates to the above-defined method, wherein said amino acid component (c) is formed by using amino acids obtained from step (i) of hydrolyzing one or more cellulose-based carbohydrate source(s).

According to the present invention, a single cellulose-based carbohydrate source may also be hydrolyzed more than once, e.g. by using different methods or conditions of hydrolyzation in order to obtain different carbohydrate (and/or amino acid) compositions and maximize the carbohydrate (and/or amino acid) yield from a single source. For example, a cellulose-based carbohydrate source, such as a plant biomass, may be hydrolyzed in a first step to e.g. mainly break down the hemicellulose part thereof, thus yielding a mixture of pentoses and hexoses, such as xylose and glucose. The same cellulose-based carbohydrate source may then be subsequently subjected to another hydrolyzation step in order to e.g. effectively break down the cellulose part contained therein, thus yielding mainly hexoses, such as glucose. It is further possible to employ one or more hydrolysis steps which provide a specific yield of amino acids usable in the aqueous binder composition of the present invention.

In view of the above, the total number of hydrolyzation steps employed to a single cellulose-based carbohydrate source is not limited herein and includes, for example, three, four, five or six subsequent hydrolysis steps. According to the present invention, the respective carbohydrate/amino acid fractions obtained from each of said hydrolysis steps may be combined in a manner to adjust a desired composition regarding the content of pentose(s), hexose(s) and amino acid(s).

However, according to the present invention, in order to form the amino acid component (c) usable in the binder composition defined above, amino acids obtained from the same hydrolysis and isolating steps employed for obtaining the carbohydrate component or parts thereof, may be used. For example, hydrolysis of a cellulose-based carbohydrate source may, next to the afore-mentioned carbohydrates, simultaneously yield one or more amino acids, which may then be readily used in the binder composition of the present invention. Such a process would be highly beneficial in terms of product efficiency and use of resources.

Binder compositions in accordance with the present invention and/or produced by a method in accordance with the present invention may be applied to, for example, a collection of loose matter and cured or cross-linked, for example by heating; the binder may hold a collection of loose matter together. Alternatively or additionally, the binder may be used to impregnate a surface and/or to provide a coating at a surface.

The binders and binder compositions described herein may be used in respect of products comprising a product selected from the group consisting of: mineral wool insulation, glass wool insulation, stone wool insulation, a collection of fibers, a collection of particles, a collection of cellulose containing particles or fibers, a wood board, an orientated strand board, a wood particle board, plywood, an abrasive, a non-woven fiber product, a woven fiber product, a foundry mould, a refractory product, a briquette, a friction material, a filter, and an impregnated laminate.

Particularly when used as a binder for mineral wool insulation, the amount of a cured binder may be ≥ 2% or ≥ 3% or ≥ 4% and/or ≤ 15% or ≤ 12 % or ≤ 10% or ≤ 8% by weight with respect to the total weight of binder and mineral wool. This may be measured by loss on ignition.

Particularly when used as a binder for wood boards or cellulosic materials, the amount of a cured binder (weight of dry binder to weight of dry wood or to weight of dry cellulosic containing material) may be ≥ 7% or ≥ 10% or ≥ 12% and/or ≤ 25% or ≤ 20 % or ≤ 18% or ≤ 15%.

The figures show:
Figure 1 shows a diagram wherein cure rate of various binder compositions is related to the carbohydrate composition thereof with respect its pentose/hexose content.
Figure 2 shows a diagram of different cure rates obtained from various xylose-containing binder compositions.
Figures 3 shows laboratory cure rates obtained with binders using different proportions of glucose and xylose as the carbohydrate component of a binder and ammonium sulphate as the amine component.

The binder system of the present invention is free of environmentally problematic reactants/products and is particularly formaldehyde-free, and at the same time shows excellent cure rates which enable the reduction of cure time or cure temperature, thus providing a more efficient production, e.g. of fiber-based products such as glass or rock wool. In addition, as a further ecologically valuable asset, the binder system of the present invention may be produced by a method according to which cellulose-based, and thus renewable carbohydrate sources are used for preparing the carbohydrate component of said binder composition. Said cellulose-based carbohydrate sources may be energy plants known to contain high amounts of cellulose, or cellulose-containing wastes of all sorts, such as (low grade) paper waste, or waste incurred during industrial paper production.

The following examples are intended for further illustration without intention to limit the subject matter of the present invention.

### Examples:

### Example 1: Cure rates of xylose-containing binder compositions using hexamethylenediamine ("HMDA")

Aqueous binder compositions were prepared according to the formulations provided in Table 1, below. The overall compositions are based on 80 mass% sugars + 20 mass% hexamethylenediamine, calculated solids 70 mass%.

**Table 1**

| | | Components (g) | | | | | |
|---|---|---|---|---|---|---|---|
| Formulations (mass% of pentose in brackets) | Gelling time (s) | HMDA | DMH | Xylose | Water | Mannose | Arabinose |
| DMH | 851 | 10.00 | 30.80 | - | 9.20 | - | - |
| 7/8 DMH+ 1/8 Xylose (9,68) | 528 | 10.18 | 27.43 | 2.94 | 9.45 | - | - |
| 3/4 DMH+ 1/4 Xylose (20,01) | 451 | 10.36 | 23.94 | 5.99 | 9.71 | - | - |
| 5/8 DMH+ 3/8 Xylose (31,05) | 359 | 10.56 | 20.32 | 9.15 | 9.97 | - | - |
| 1/2 DMH+ 1/2 Xylose (43,23) | 305 | 10.69 | 16.47 | 12.54 | 10.30 | - | - |
| 3/8 DMH+ 5/8 Xylose (55,55) | 286 | 10.96 | 12.66 | 15.82 | 10.56 | - | - |
| 1/4 DMH+ 3/4 Xylose (69,34) | 266 | 11.14 | 8.58 | 19.40 | 10.87 | - | - |
| 1/8 DMH+ 7/8 Xylose (83,99) | 251 | 11.40 | 4.39 | 23.03 | 11.18 | - | - |
| Xylose (100,00) | - | 11.49 | - | 26.95 | 11.49 | - | - |
| 1/3 DMH+ 1/3 Xylose+ 1/3 Mannose (31,95) | 380 | 10.56 | 10.16 | 9.15 | 10.85 | 9.33 | - |
| 1/2 Arabinose+ 1/4 DMH+ 1/4 Xylose (69,23) | 286 | 11.17 | 8.60 | 6.45 | 10.87 | - | 12.90 |

The ratios pentose versus hexose were calculated on a molarity basis (with the content in mass% of the pentose(s) provided in brackets), and the calculated solids were kept the same to allow a like for like comparison of the formulations.

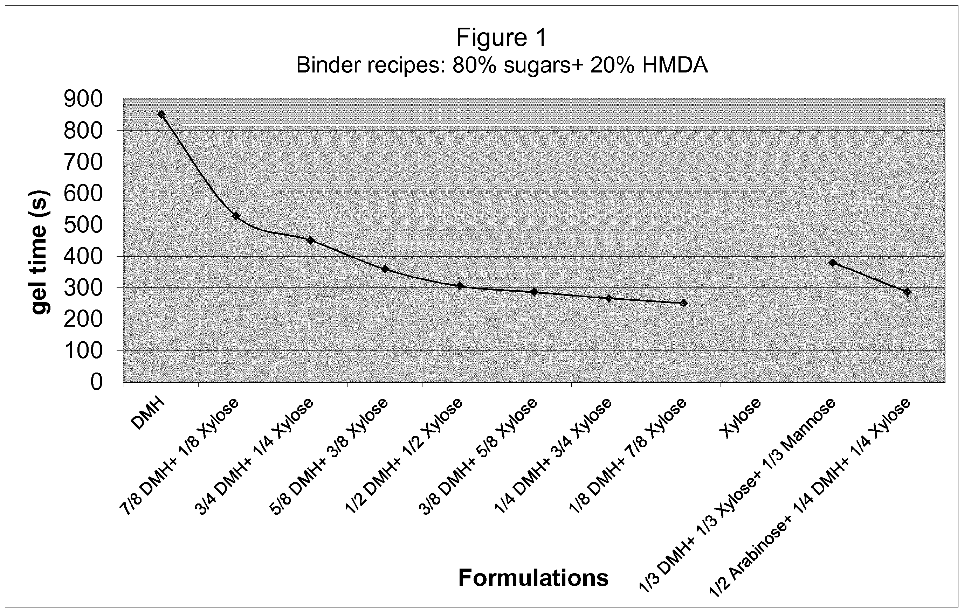

The two last formulations containing sugar mixtures reflect typical carbohydrate mixtures obtained when hydrolyzing soft wood and sugar beet. As can clearly be taken from the graph in Figure 1, the presence of a pentose (here: xylose or a mixture of xylose/arabinose) significantly improves the cure rate achieved with the resulting binder composition. However, surprisingly, there is no linear relation between the pentose content and improvement in cure rates, and the effect attenuates when adding great excesses of xylose. Accordingly, the amount of pentose in the carbohydrate component should be adjusted to optimize cure speed.

When replacing half of the hexose DMH (dextrose monohydrate) in a 2/3 DMH and 1/3 xylose composition with the hexose mannose, which has a similar structure when compared to dextrose, said mixture results in a similar curing kinetic when compared to the above-mentioned composition comprising 2/3 DMH and 1/3 xylose.

Also, replacing parts of the xylose with another pentose (arabinose) results in similar curing kinetics when compared to the composition containing only xylose.

### Example 2: Cure rates of xylose-containing binder compositions using (NH₄)₂SO₄

Three aqueous binder compositions (up to 100 mL) were prepared according to the formulations provided in Table 2, below.

**Table 2**

| Formulations | 85.3% Glucose + 0.8% Xylose + 13.9% (NH₄)₂SO₄ | 46.6% Glucose + 38.4% Xylose + 15.0% (NH₄)₂SO₄ | 83.7% Xylose + 16.3% (NH₄)₂SO₄ |
|---|---|---|---|
| Glucose (g) | 16.20 | 8.20 | - |
| Xylose (g) | 0.15 | 6.75 | 13.51 |
| (NH₄)₂SO₄ (g) | 2.64 | 2.64 | 2.64 |

These formulations were dropped on filter pads and heated at 140°C. Brown polymers were formed on the filter pads, then dissolved in water and absorbance of the solutions was measured to build the cure rates of each formulation over time.

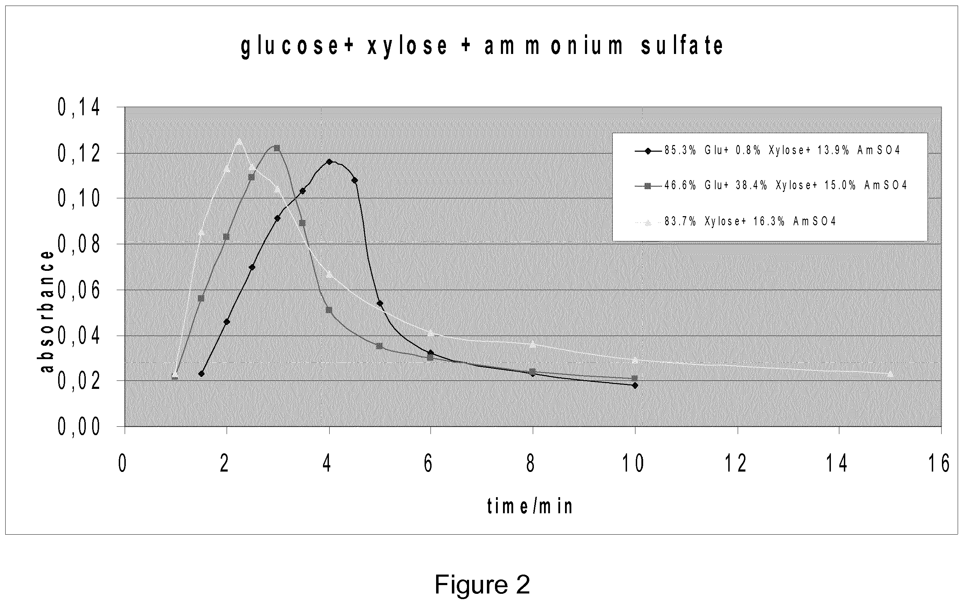

The resulting cure rates can be taken from Figure 2, from which it is apparent that small (catalytic) amounts of a pentose are not sufficient to significantly accelerate the cure rate.

### Example 3: Cure rates of glucose-xylose containing binder compositions using (NH₄)₂SO₄

The cure rate of the following formulations of binders was tested in the laboratory:

| **Sample** | A | B | C | D | E | F |
|---|---|---|---|---|---|---|
| **Molar % glucose** | 100 | 85 | 70 | 50 | 30 | 0 |
| **Molar % xylose** | 0 | 15 | 30 | 50 | 70 | 100 |
| **Actual weight % of Xylose** | 0% | 12.82% | 26.32% | 45.45% | 66.04% | 100% |
| **Weight glucose (g)** | 4.50 | 3.83 | 3.15 | 2.25 | 1.35 | 0.00 |
| **Weight xylose (g)** | 0.00 | 0.56 | 1.13 | 1.88 | 2.63 | 3.75 |
| **Weight of DMH required (g)** | 4.95 | 4.21 | 3.47 | 2.48 | 1.49 | 0.00 |
| **Ammonia Sulphate (g)** | 0.50 | 0.50 | 0.50 | 0.50 | 0.50 | 0.50 |
| **Total solids weight (g)** | 5.00 | 4.89 | 4.78 | 4.63 | 4.48 | 4.25 |
| **Water (g)** | 13.05 | 13.12 | 13.18 | 13.27 | 13.36 | 13.50 |
| **Total batch weight (g)** | 18.50 | 18.39 | 18.28 | 18.13 | 17.98 | 17.75 |

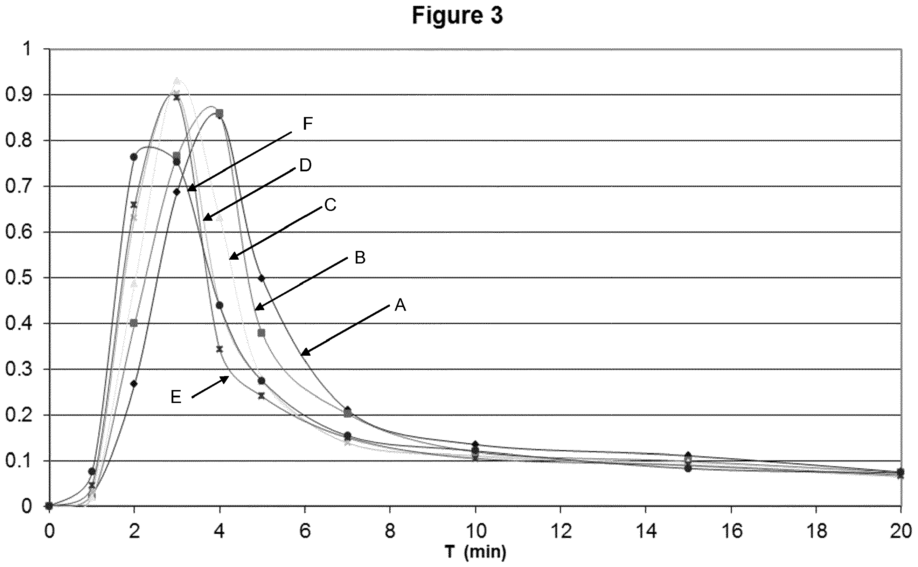

The results are shown in Figure 3 which plots light absorbance at 470nm or each sample being cured (y-axis) against time T in minutes (x-axis). It is interesting to note that Sample D (about 45% wt. xylose and 55% wt. glucose; about 50% mol xylose and 50% mol glucose) gave a cure rate similar to 100% xylose; this indicates a synergy between xylose and glucose and, more generally, between pentose(s) and hexose(s) in binders disclosed herein.

## Claims

1. An aqueous binder composition, comprising a carbohydrate component (a) and an amine component (b), wherein the carbohydrate component (a) comprises one or more pentose(s) in a total amount of 3 to 70 mass% and one or more hexose(s) in a total amount of 97 to 30 mass%, based on the mass of the total carbohydrate component (a).

2. The binder composition according to claim 1, wherein the one or more pentose(s) is/are selected from the group consisting of xylose, arabinose, ribose, lyxose, ribulose and xylulose, or any combination thereof.

3. The binder composition according to any one of claims 1 to 2, wherein the amine component (b) is selected from the group consisting of proteins, peptides, amino acids, organic amines, polyamines, ammonia, ammonium salts of a monomeric polycarboxylic acid, ammonium salts of a polymeric polycarboxylic acid, and ammonium salts of an inorganic acid, or any combination thereof.

4. The binder composition according to any one of claims 1 to 3, wherein said binder composition further comprises an amino acid component (c).

5. A binder obtainable by heating the binder composition according to any one of claims 1 to 4.

6. Use of a binder composition in accordance with any preceding claim for manufacturing a product selected from the group consisting of: mineral wool insulation, glass wool insulation, stone wool insulation, a collection of fibers, a collection of particles, a collection of cellulose containing particles or fibers, a wood board, an orientated strand board, a wood particle board, plywood, an abrasive, a non-woven fiber product, a woven fiber product, a foundry mould, a refractory product, a briquette, a friction material, a filter, and an impregnated laminate.

7. A method of producing an aqueous binder composition, comprising a carbohydrate component (a) and an amine component (b), wherein the carbohydrate component (a) comprises one or more pentose(s) in a total amount of 3 to 70 mass% and one or more hexose(s) in a total amount of 97 to 30 mass%, based on the mass of the total carbohydrate component (a), wherein the method comprises the steps:
(i) hydrolyzing one or more cellulose-based carbohydrate source(s),
(ii) isolating the carbohydrates from the one or more hydrolized cellulose-based carbohydrate source(s),
(iii) using the isolated carbohydrates from the one or more cellulose-based carbohydrate source(s) to form a carbohydrate component (a), comprising one or more pentose(s) in a total amount of 3 to 70 mass%, based on the mass of the total carbohydrate component (a), and
(iv) adding an amine component (b).

8. The method according to claim 7, wherein step (i) of hydrolyzing one or more cellulose-based carbohydrate source(s) independently comprises treatment with heat/pressure, enzymatic and/or acidic treatment and/or metal chloride hydrolysis of each of said one or more cellulose-based carbohydrate source(s).

9. The method according to any one of claims 7 to 8, wherein the one or more pentose(s) is/are selected from the group consisting of xylose, arabinose, ribose, lyxose, ribulose and xylulose, or any combination thereof.

10. The method according to any one of claims 7 to 9, wherein the one or more cellulose-based carbohydrate source(s) are selected from the group consisting of agricultural residues such as corn stover and sugarcane bagasse; dedicated energy crops such as sugar beet, switchgrass, *Miscanthus*, hemp, willow and corn; wood residues, such as wood chips, timber barc, saw mill discards and paper mill discards; municipal paper waste, such as used paper and low grade paper waste; as well as industrial cellulose sources, such as brewery waste and dairy products.

11. The method according to any one of claims 7 to 10, wherein the amine component (b) is selected from the group consisting of proteins, peptides, amino acids, organic amines, polyamines, ammonia, ammonium salts of a monomeric polycarboxylic acid, ammonium salts of a polymeric polycarboxylic acid, and ammonium salts of an inorganic acid, or any combination thereof.

12. The method according to any one of claims 7 to 11, wherein step (iii) of forming the carbohydrate component (a) includes combining carbohydrates and/or carbohydrate mixtures obtained from at least two different cellulose-based carbohydrate sources.

13. The method according to any one of claims 7 to 12, wherein said binder composition further comprises an amino acid component (c).

14. The method according to claim 13, wherein said amino acid component (c) is formed by using amino acids obtained from step (i) of hydrolyzing one or more cellulose-based carbohydrate source(s).

15. A method of manufacturing a product selected from the group consisting of:
mineral wool insulation, glass wool insulation, stone wool insulation, a collection of fibers, a collection of particles, a collection of cellulose containing particles or fibers, a wood board, an orientated strand board, a wood particle board, plywood, an abrasive, a non-woven fiber product, a woven fiber product, a foundry mould, a refractory product, a briquette, a friction material, a filter, and an impregnated laminate
comprising the steps of:
- applying to non-or loosely assembled matter a binder composition in accordance with any of claims 1 to 3 or a binder composition manufactured in accordance with any of claims 7 to 14; and
- curing the binder.

## Patentansprüche

1. Wässrige Bindemittelzusammensetzung, umfassend einen Kohlenhydratbestandteil (a) und einen Aminbestandteil (b), wobei der Kohlenhydratbestandteil (a) eine oder mehrere Pentose(n) in einer Gesamtmenge von 3 bis 70 Massen% und eine oder mehrere Hexose(n) in einer Gesamtmenge von 93 bis 30 Massen%, basierend auf der Masse des gesamten Kohlenhydratbestandteils (a), umfasst.

2. Bindemittelzusammensetzung nach Anspruch 1, wobei die eine oder mehreren Pentose(n) ausgewählt ist/sind aus der Gruppe, bestehend aus Xylose, Arabinose, Ribose, Lyxose, Ribulose und Xylulose oder jeglicher Kombination davon.

3. Bindemittelzusammensetzung nach Anspruch 1 oder 2, wobei der Aminbestandteil (b) ausgewählt ist aus der Gruppe, bestehend aus Proteinen, Peptiden, Aminosäuren, organischen Aminen, Polyaminen, Ammoniak, Ammoniumsalzen von einer monomeren Polycarbonsäure, Ammoniumsalzen von einer polymeren Polycarbonsäure und Ammoniumsalzen von einer anorganischen Säure oder jeglicher Kombination davon.

4. Bindemittelzusammensetzung nach einem der Ansprüche 1 bis 3, wobei die Bindemittelzusammensetzung weiter einen Aminosäurebestandteil (c) umfasst.

5. Bindemittel, erhältlich durch Erwärmen der Bindemittelzusammensetzung nach einem der Ansprüche 1 bis 4.

6. Verwendung einer Bindemittelzusammensetzung nach einem der vorstehenden Ansprüche zur Herstellung eines Produkts, ausgewählt aus der Gruppe, bestehend aus: Mineralwolleisolierung, Glaswolleisolierung, Steinwolleisolierung, einer Fasersammlung, einer Teilchensammlung, einer Cellulosesammlung, enthaltend Teilchen oder Fasern, einer Holzplatte, einer Grobspanplatte, einer Holzspanplatte, Sperrholz, einem Schleifmittel, einem Vliesfaserprodukt, einem Fasergewebeprodukt, einer Gussform, einem Feuerfestprodukt, einem Brikett, einem Reibmaterial, einem Filter und einem imprägnierten Laminat.

7. Verfahren zur Herstellung einer wässrigen Bindemittelzusammensetzung, umfassend einen Kohlenhydratbestandteil (a) und einen Aminbestandteil (b), wobei der Kohlenhydratbestandteil (a) eine oder mehrere Pentose(n) in einer Gesamtmenge von 3 bis 70 Massen% und eine oder mehrere Hexose(n) in einer Gesamtmenge von 93 bis 30 Massen%, basierend auf der Masse des gesamten Kohlenhydratbestandteils (a), umfasst,
wobei das Verfahren die Schritte umfasst:
(i) Hydrolysieren einer oder mehrerer cellulosebasierter/n Kohlenhydratquelle(n),
(ii) Isolieren der Kohlenhydrate von der einen oder den mehreren hydrolysierten cellulosebasierten Kohlenhydratquelle(n),
(iii) Verwenden der von der einen oder den mehreren hydrolysierten cellulosebasierten Kohlenhydratquelle(n) isolierten Kohlenhydrate zum Bilden eines Kohlenhydratbestandteils (a), umfassend eine oder mehrere Pentose(n) in einer Gesamtmenge von 3 bis 70 Massen%, basierend auf der Masse des gesamten Kohlenhydratbestandteils (a), und
(iv) Hinzufügen eines Aminbestandteils (b).

8. Verfahren nach Anspruch 7, wobei der Schritt (i) des Hydrolysierens einer oder mehrerer cellulosebasierter Kohlenhydratquelle(n) unabhängig eine Behandlung mit Wärme/Druck, eine enzymatische und/oder saure Behandlung und/oder Metallchloridhydrolyse von jeder der einen oder mehreren cellulosebasierten Kohlenhydratquelle(n) umfasst.

9. Verfahren nach einem der Ansprüche 7 bis 8, wobei die eine oder mehreren Pentose(n) ausgewählt ist/sind aus der Gruppe, bestehend aus Xylose, Arabinose, Ribose, Lyxose, Ribulose und Xylulose oder jeglicher Kombination davon.

10. Verfahren nach einem der Ansprüche 7 bis 9, wobei die eine oder mehreren cellulosebasierte(n) Kohlenhydratquelle(n) ausgewählt sind aus der Gruppe, bestehend aus landwirtschaftlichen Resten wie Maisstroh und Zuckerrohrbagasse, Energiepflanzen wie Zuckerrübe, Rutenhirse, *Miscanthus,* Hanf, Weide und Mais, Holzresten wie Holzspänen, Holzrinde, Sägemühlenausschuss und Papierwerkausschuss, Hauspapierabfall wie Altpapier und Minderqualitätspapierabfall, sowie industriellen Cellulosequellen wie Brauereiabfall und Milchprodukte.

11. Verfahren nach einem der Ansprüche 7 bis 10, wobei der Aminbestandteil (b) ausgewählt ist aus der Gruppe, bestehend aus Proteinen, Peptiden, Aminosäuren, organischen Aminen, Polyaminen, Ammoniak, Ammoniumsalzen von einer monomeren Polycarbonsäure, Ammoniumsalzen von einer polymeren Polycarbonsäure und Ammoniumsalzen von einer anorganischen Säure oder jeglicher Kombination davon.

12. Verfahren nach einem der Ansprüche 7 bis 11, wobei der Schritt (iii) des Bildens des Kohlenhydratbestandteils (a) das Kombinieren von Kohlenhydraten und/oder Kohlenhydratgemischen, erhalten von mindestens zwei verschiedenen cellulosebasierten Kohlenhydratquellen, einschließt.

13. Verfahren nach einem der Ansprüche 7 bis 12, wobei die Bindemittelzusammensetzung weiter einen Aminosäurebestandteil (c) umfasst.

14. Verfahren nach Anspruch 13, wobei der Aminosäurebestandteil (c) durch Verwenden von Aminosäuren, erhalten in Schritt (i) des Hydrolysierens einer oder mehrerer cellulosebasierten/r Kohlenhydratquellen, gebildet ist.

15. Verfahren zur Herstellung eines Produktes, ausgewählt aus der Gruppe, bestehend aus: Mineralwolleisolierung, Glaswolleisolierung, Steinwolleisolierung, einer Fasersammlung, einer Teilchensammlung, einer Cellulosesammlung, enthaltend Teilchen oder Fasern, einer Holzplatte, einer Grobspanplatte, einer Holzspanplatte, Sperrholz, einem Schleifmittel, einem Vliesfaserprodukt, einem Fasergewebeprodukt, einer Gussform, einem Feuerfestprodukt, einem Brikett, einem Reibmaterial, einem Filter und einem imprägnierten Laminat,
umfassend die Schritte:
- Auftragen einer Bindemittelzusammensetzung nach einem der Ansprüche 1 bis 3 oder einer Bindemittelzusammensetzung, hergestellt nach einem der Ansprüche 7 bis 14, auf nicht oder locker gefügtes Material; und
- Härten des Bindemittels.

## Revendications

1. Composition aqueuse de liant, comprenant un composant glucide (a) et un composant amine (b), où le composant glucide (a) comprend un ou plusieurs pentose(s) en une quantité totale de 3 à 70% en masse et un ou plusieurs hexose (s) en une quantité totale de 97 à 30% en masse, sur base de la masse du total du composant glucide (a).

2. Composition de liant selon la revendication 1, où le ou les pentose (s) est/sont choisi(s) parmi le groupe consistant en du xylose, de l'arabinose, du ribose, du lyxose, du ribulose et du xylulose, ou de toute combinaison de ceux-ci.

3. Composition de liant selon l'une quelconque des revendications 1 et 2, où le composant amine (b) est choisi parmi le groupe consistant en des protéines, des peptides, des acides aminés, des amines organiques, des polyamines, de l'ammoniac, de l'ammoniaque, des sels d'ammonium d'un polyacide carboxylique monomère, des sels d'ammonium d'un polyacide carboxylique polymère, et des sels d'ammonium d'un acide inorganique, ou de toute combinaison de ceux-ci.

4. Composition de liant selon l'une quelconque des revendications 1 à 3, où ladite composition de liant comprend en outre un composant acide aminé (c).

5. Liant pouvant être obtenu par chauffage de la composition de liant selon l'une quelconque des revendications 1 à 4.

6. Utilisation d'une composition de liant selon l'une quelconque des revendications précédentes pour la préparation d'un produit sélectionné parmi le groupe consistant en : un matériau d'isolation à base de laine minérale, un matériau d'isolation à base de laine de verre, un matériau d'isolation à base de laine de roche, un ensemble de fibres, un ensemble de particules, un ensemble de particules ou de fibres contenant de la cellulose, un panneau en bois, un panneau à brins orientés, un panneau de particules en bois, un contreplaqué, un abrasif, un produit en fibres non tissées, un produit en fibres tissées, un moule de fonderie, un produit réfractaire, une briquette, un matériau de frottement, un filtre et un stratifié imprégné.

7. Procédé de production d'une composition aqueuse de liant, comprenant un composant glucide (a) et un composant amine (b), où le composant glucide (a) comprend un ou plusieurs pentose(s) en une quantité totale de 3 à 70% en masse et un ou plusieurs hexose(s) en une quantité totale de 97 à 30% en masse, sur base de la masse du total du composant glucide (a), où le procédé comprend les étapes :
(i) d'hydrolyse d'une ou de plusieurs source(s) de glucide à base de cellulose,
(ii) d'isolement des glucides de la ou des source(s) de glucide à base de cellulose hydrolysées,
(iii) d'utilisation des glucides isolés de la ou des source(s) de glucide à base de cellulose pour former un composant glucide (a), comprenant un ou plusieurs pentose(s) en une quantité totale de 3 à 70% en masse, sur base de la masse de composant glucide (a) total, et
(iv) d'addition d'un composant amine (b).

8. Procédé selon la revendication 7, où l'étape (i) d'hydrolyse d'une ou de plusieurs source(s) de glucide à base de cellulose comprend indépendamment, le traitement par chaleur/pression, traitement enzymatique et/ou acide et/ou hydrolyse par chlorure métallique de chacune de la ou des source(s) de glucide à base de cellulose.

9. Procédé selon l'une quelconque des revendications 7 à 8, où le ou les pentose (s) est/sont choisi(s) parmi le groupe consistant en du xylose, de l'arabinose, du ribose, du lyxose, du ribulose et du xylulose, ou de toute combinaison de ceux-ci.

10. Procédé selon l'une quelconque des revendications 7 à 9, où la ou les source(s) de glucide à base de cellulose est/sont choisie(s) parmi le groupe consistant en des résidus agricoles comme des cannes de maïs et la bagasse de canne à sucre ; des récoltes destinées à l'énergie comme la betterave sucrière, le panic raide, le *Miscanthus,* le chanvre, le saule et le maïs ; des résidus de bois tels que des copeaux de bois, de l'écorce de bois, des déchets de scierie et des déchets de production de papier ; des déchets municipaux de papier comme le papier usagé et les déchets de papier de faible qualité ; ainsi que des sources industrielles de cellulose comme des déchets de brasserie et les produits laitiers.

11. Procédé selon l'une quelconque des revendications 7 à 10, où le composant amine (b) est choisi parmi le groupe consistant en des protéines, des peptides, des acides aminés, des amines organiques, des polyamines, de l'ammoniac, de l'ammoniaque, des sels d'ammonium d'un polyacide carboxylique monomère, des sels d'ammonium d'un polyacide carboxylique polymère, et des sels d'ammonium d'un acide inorganique, ou de toute combinaison de ceux-ci.

12. Procédé selon l'une quelconque des revendications 7 à 11, où l'étape (iii) de formation du composant glucide (a) comprend la combinaison de glucides et/ou de mélanges de glucides obtenus d'au moins deux sources différentes de glucide à base de cellulose.

13. Procédé selon l'une quelconque des revendications 7 à 12, où ladite composition de liant comprend en outre un composant acide aminé (c).

14. Procédé selon la revendication 13, où ledit composant acide aminé (c) est formé en utilisant les acides aminés obtenus de l'étape (i) d'hydrolyse d'une ou de plusieurs source(s) de glucide à base de cellulose.

15. Procédé de préparation d'un produit choisi parmi le groupe consistant en : un matériau d'isolation à base de laine minérale, un matériau d'isolation à base de laine de verre, un matériau d'isolation à base de laine de roche, un ensemble de fibres, un ensemble de particules, un ensemble de particules ou de fibres contenant de la cellulose, un panneau en bois, un panneau à brins orientés, un panneau de particules en bois, un contreplaqué, un abrasif, un produit en fibres non tissées, un produit en fibres tissées, un moule de fonderie, un produit réfractaire, une briquette, un matériau de frottement, un filtre et un stratifié imprégné, comprenant les étapes de :
- application sur la matière assemblée libre ou non, d'une composition de liant selon l'une quelconque des revendications 1 à 3 ou d'une composition de liant préparée selon l'une quelconque des revendications 7 à 14, et
- réticulation du liant.
